(19) Europäisches Patentamt

European Patent Office

Office européen des brevets

(11) **EP 0 630 123 B1**

(12) **FASCICULE DE BREVET EUROPEEN**

(45) Date de publication et mention
de la délivrance du brevet:
**14.11.2001 Bulletin 2001/46**

(51) Int Cl.⁷: **H04B 10/16**

(21) Numéro de dépôt: **94401365.5**

(22) Date de dépôt: **17.06.1994**

(54) **Dispositif pour la remise en forme d'un train d'impulsions optiques et dispositif pour la récupération d'un signal périodique synchronisé sur un train d'impulsions optiques modulées**

Einrichtung zur Regenerierung eines Impulszuges und Einrichtung zur Rückgewinnung eines zu einem modulierten Impulszug synchronisierten periodischen Signals

Device for reshaping a train of optical pulses and device for recovering a periodic signal synchronised to a train of modulated optical pulses

(84) Etats contractants désignés:
**DE GB**

(30) Priorité: **18.06.1993 FR 9307380**

(43) Date de publication de la demande:
**21.12.1994 Bulletin 1994/51**

(73) Titulaire: **FRANCE TELECOM exploitant public 75015 Paris (FR)**

(72) Inventeur: **Devaux, Fabrice
F-75014 Paris (FR)**

(74) Mandataire: **Schrimpf, Robert
Cabinet Regimbeau
20, rue de Chazelles
75847 Paris cedex 17 (FR)**

(56) Documents cités:
**WO-A-92/09159**

• **JOURNAL OF LIGHTWAVE TECHNOLOGY., vol.10, no.12, Décembre 1992, NEW YORK US pages 1912 - 1918 SUZUKI ET AL 'New applications of a sinusoidally driven InGaAsP electroabsorption modulator to in-line optical gates with ASE noise reduction effect'**
• **PATENT ABSTRACTS OF JAPAN vol. 17, no. 15 (E-1305) 1993 & JP-A-04 245 726 (NEC) 2 Septembre 1992**
• **PATENT ABSTRACTS OF JAPAN vol. 12, no. 35 (E-579) 1988 & JP-A-62 189 830 (NEC)**

EP 0 630 123 B1

Printed by Jouve, 75001 PARIS (FR)

## Description

La présente invention concerne la transmission par voie optique de données binaires, notamment sur de longues distances.

Plus particulièrement, l'invention est relative aux dispositifs de récupération de signaux périodiques synchronisés sur des trains d'impulsions optiques modulées, ainsi qu'aux dispositifs de répétition pour la resynchronisation et la remise en forme de trains d'impulsions optiques modulées.

On s'oriente de plus en plus pour les télécommunications longues distances (typiquement 10.000 km) vers les techniques de transmission par fibres optiques, qui permettent des communications fiables à des débits de transmission de données élevés.

Qu'elles soient modulées selon des impulsions solitons ou qu'elles soient codées en modulation RZ (Retour à Zéro) conventionnelle, les impulsions subissent des déformations au cours de leur propagation dans les fibres.

Dans les techniques de transmission par solitons, l'effet Gordon-Haus entraîne un décalage temporel entre impulsions solitons successives ( cf.J.P.Gordon-H.A.Haus-"Random walk of coherently amplified solitons in optical fiber transmission"- Optics Letters, vol.11, 665-667 (1986) ). En modulation RZ conventionnelle, la forme de l'impulsion se modifie par dispersion.

Or, ces déformations limitent les transmissions en débit et en distance.

Pour résoudre ce problème, les systèmes de télécommunications longues distances par fibres optiques comportent en ligne des dispositifs de répétition qui effectuent une resynchronisation et une remise en forme des impulsions transmises. Ces dispositifs de répétition sont répartis régulièrement dans le circuit de fibres optiques, par exemple tous les 50 km.

On pourra avantageusement se référer à cet égard à l'article:

- "Experimental demonstration of soliton data transmission over unlimited distances with soliton controls in the time and frequency domains" - Nakazawa et al. - NTT - Optical Fiber Communication 93 PD7, Optical Society of America.

Dans les dispositifs de répétition dont fait notamment état cet article, une partie du signal transmis est prélevée pour être convertie par une photodiode en un signal électrique. Un signal d'horloge est extrait de ce signal électrique par des moyens électroniques classiques de récupération d'horloge. Le signal d'horloge ainsi extrait est utilisé pour commander un modulateur à effet électro-optique sur lequel les impulsions transmises sont envoyées pour être resynchronisées et remises en forme.

On rappelle qu'un modulateur électro-optique est un interféromètre (interféromètre de Mach. Zender) qui module la lumière qu'il reçoit en utilisant la variation d'indice de réfraction que présentent certains matériaux en fonction du champ électrique qui leur est imposé. Un exemple de matériau de ce type est le niobate de lithium ($LiNbO_3$) utilisé pour réaliser des modulateurs électro-optiques fonctionnant à 1,55 µm.

Ces dispositifs de répétition présentent néanmoins plusieurs inconvénients.

Etant donné qu'une partie du signal transmis est prélevée en ligne, les pertes en puissance de signal optique sont importantes, ce d'autant plus que l'extraction du signal d'horloge nécessite pour chaque dispositif de répétition un niveau de signal optique important.

En outre, les circuits électroniques permettant la synchronisation du signal d'horloge sur le train d'impulsions optiques nécessitent la mise en oeuvre de composants à réponse rapide qui n'existent pas pour des débits de solitons élevés, et notamment pour des débits de l'ordre de 40 Gbit/s qui sont actuellement envisagés pour les transmission de solitons.

Un but de l'invention est de proposer un dispositif pour la récupération d'un signal synchronisé sur un train d'impulsions optiques modulées, qui permet de conserver ces impulsions optiques sans qu'elles subissent une atténuation importante.

Un autre but de l'invention est de proposer un dispositif de récupération de signal synchronisé dont la réalisation ne nécessite pas de composants ou de circuits électroniques à réponse rapide autres que ceux du générateur émettant le signal synchronisé.

Un tel dispositif de récupération de signal synchronisé est avantageusement utilisé pour réaliser un dispositif de répétition pour la resynchronisation et la remise en forme d'un train d'impulsions optiques.

On utilise déjà, dans le domaine des télécommunications par fibres optiques, des modulateurs électroabsorbants, dont le principe de fonctionnement est distinct de celui des modulateurs à effet électro-optiques. Les modulateurs électroabsorbants sont des guides d'ondes dont le matériau de coeur présente une absorption qui est commandable en fonction de la tension qu'on lui applique.

Ainsi, il a récemment été proposé de moduler la sortie d'une source laser par un modulateur électroabsorbant, afin de générer des impulsions solitons. On pourra à cet égard avantageusement se référer à l'article :

- « Transform-limited 14 ps optical pulse generation with 15 Ghz repetition rate by InGaAsp electroabsorption modulator » M. Suzuki, Electronics Letters, 21 mai 1992, vol. 28 N° 11, pp 1007-1008.

On connaît par ailleurs également par l'article « New Applications of a Sinusoïdally Driven InGaAsp Electroabsorption Modulator to In-Line Optical Gates with ASE Noise Reduction Effect » M. Suzuki, Journal of Lightwave Technology, vol. 10 N° 12, décembre 1992, pp 1912-1918, un dispositif pour la remise en forme d'un train d'impulsions optiques, comportant :

- un modulateur optique de type électroabsorbant sur lequel le train d'impulsions est envoyé pour être resynchronisé et remis en forme,
- un générateur de signal périodique réglable en phase et en fréquence qui délivre à ce modulateur un signal périodique qui commande en tension ce modulateur,
- des moyens pour synchroniser ce générateur sur le train d'impulsions optiques modulées reçues par le modulateur.

L'invention propose quant à elle d'utiliser le photocourant généré par un tel modulateur électroabsorbant lorsqu'il est dans son état absorbant et qu'il reçoit un flux lumineux, pour asservir le générateur de signaux périodiques à synchroniser.

A cet effet, l'invention a pour un objet un dispositif pour la remise en forme d'un train d'impulsions optiques, comportant :

- un modulateur optique de type électroabsorbant sur lequel le train d'impulsions est envoyé pour être resynchronisé et remis en forme,
- un générateur de signal périodique réglable en phase et en fréquence qui délivre à ce modulateur un signal périodique qui commande en tension ce modulateur,
- des moyens pour synchroniser ce générateur sur le train d'impulsions optiques modulées reçues par le modulateur,

caractérisé en ce que les moyens pour synchroniser le générateur comportent des moyens d'asservissement commandant le générateur en phase et en fréquence, de façon à minimiser la moyenne du photocourant ($\overline{i_{ph}}$) issu du modulateur lorsqu'il est dans son état absorbant et qu'il reçoit une impulsion optique.

Un autre objet de l'invention est un système de télécommunications longues distances par fibres optiques comportant :

- des moyens pour la génération de trains d'impulsions optiques modulées,
- des moyens pour la détection et le décodage de ces impulsions,
- un circuit de fibres optiques pour la propagation des impulsions entre les moyens de génération et les moyens de réception et de décodage,
- au moins un dispositif du type précité pour la répétition en ligne des trains d'impulsions optiques.

Un autre objet de l'invention est un dispositif pour la récupération d'un signal périodique synchronisé sur un train d'impulsions optiques modulées, comportant :

- un générateur de signal périodique réglable en phase et en fréquence,
- des moyens électro-optiques comportant un modulateur électroabsorbant commandé en tension par le signal périodique synchronisé issu du générateur et qui reçoivent les impulsions optiques et émettent un signal électrique correspondant,
- des moyens pour asservir en phase et en fréquence ce générateur en fonction de ce signal électrique, de façon que ce générateur délivre le signal synchronisé,

caractérisé en ce que les moyens d'asservissement commandent le générateur, de façon que la moyenne du photocourant ($\overline{i_{ph}}$), issu de ce modulateur lorsqu'il est dans son état absorbant et qu'il reçoit une impulsion optique, soit minimale.

D'autres caractéristiques et avantages de l'invention ressortiront encore de la description qui suit de plusieurs modes de réalisation possibles pour celle-ci. Cette description doit être lue en regard des dessins annexés sur lesquels :

- la figure 1 représente schématiquement un système de télécommunications par fibres optiques comportant un dispositif de remise en forme conforme à un mode de réalisation possible pour l'invention ;
- la figure 2a représente un train d'impulsions optiques particulier ;
- la figure 2b représente un signal périodique synchronisé sur le train d'impulsions optiques de la figure 2a ;

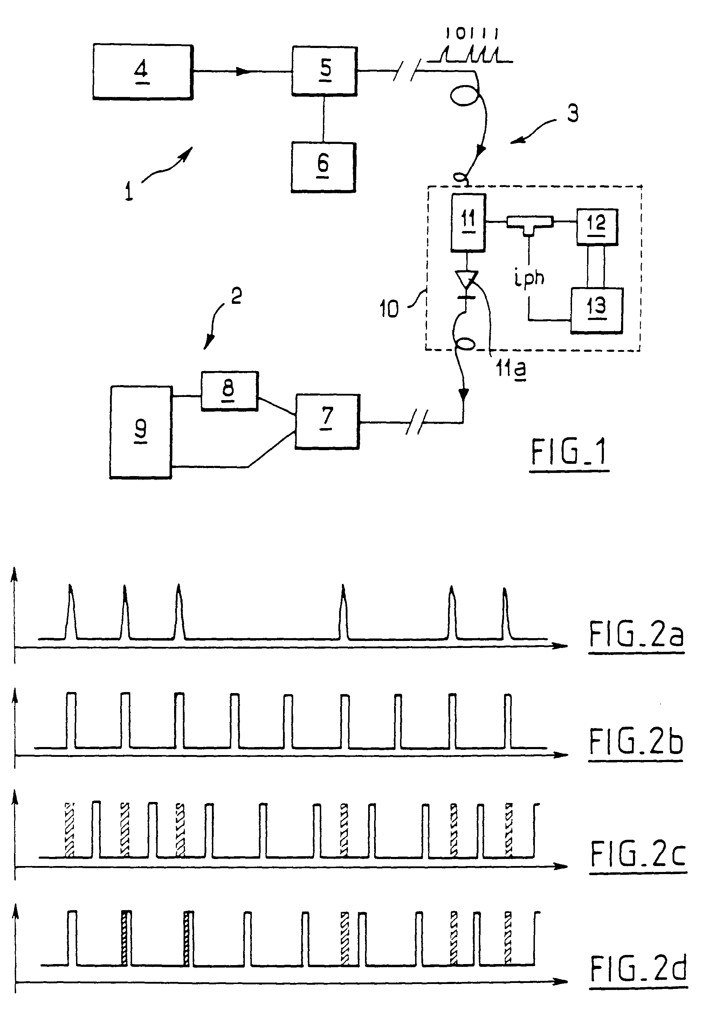

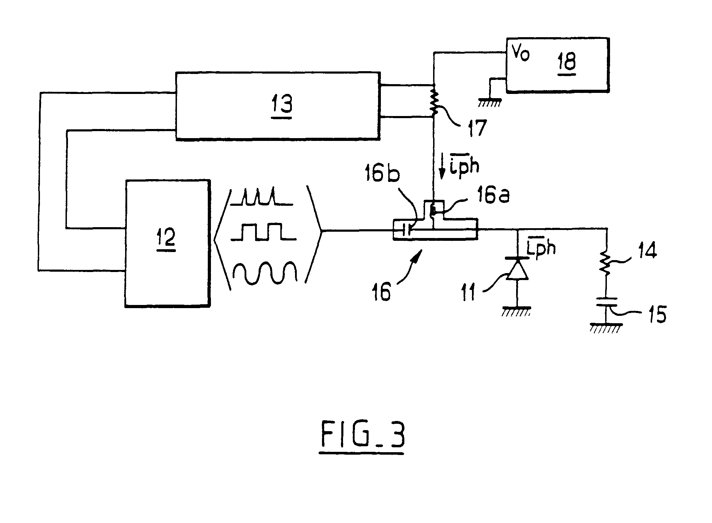

  . la figure 2c représente un signal périodique décalé en phase par rapport au train d'impulsions optiques de la figure 2a ;
  . la figure 2d représente un signal périodique décalé en fréquence par rapport au train d'impulsions optiques de la figure 2a ;
  . la figure 3 représente schématiquement un dispositif conforme à un autre mode de réalisation possible.

Le système de télécommunications optiques représenté sur la figure 1 comporte en un point d'émission des moyens 1 pour la génération de trains d'impulsions solitons et en un point de réception des moyens 2 pour la détection et le décodage de ces impulsions. Entre les points d'émission et de réception, les impulsions solitons sont transportées par l'intermédiaire d'un circuit de fibres optiques 3.

De façon classique, les moyens 1 de génération d'impulsions comportent une source laser 4 et un modulateur 5 commandé par une unité de gestion 6. La source laser 4 émet par exemple une lumière dont la longueur d'onde principale est 1,55 µm, longueur d'onde qui correspond au minimum d'atténuation dans les fibres du circuit optique 3. Le faisceau ainsi émis est envoyé sur le modulateur 5 qui le code en impulsions solitons qui correspondent à des informations binaires reçues par l'unité 6.

Le modulateur 5 est par exemple un modulateur électroabsorbant commandé en tension (cf. "Transform-limited 14 ps optical pulse generation with 15 Ghz repetition rate by InGaAsP electroabsorption modulator" M. Suzuki, Electronics Letters, 21 mai 1992, vol. 28 N° 11, pp 1007-1008).

Les moyens 2 comportent quant à eux une photodiode 7 qui convertit le signal optique qu'elle reçoit en un train d'impulsions électriques. Ce signal est envoyé, d'une part, sur un circuit de récupération d'horloge 8, et, d'autre part, avec le signal d'horloge récupéré, sur une unité de traitement 9 pour le décodage du signal transmis.

Sur le circuit de fibres optiques 3 sont montés en ligne plusieurs dispositifs 10 de répétition pour la resynchronisation et la remise en forme des signaux émis.

Un tel dispositif de remise en forme 10 comporte plus particulièrement un modulateur électroabsorbant 11 commandé en tension par un générateur 12 de signaux périodiques. Le modulateur électroabsorbant 11 reçoit le train d'impulsions optiques transporté par les fibres 3. Un amplificateur 11a est prévu en sortie du modulateur 11 pour amplifier les signaux issus de celui-ci. Cet amplificateur 11a est complété par un filtre passe-bande optique (non représenté).

On pourra avantageusement se référer en ce qui concerne les techniques de modulateurs électroabsorbants aux différentes publications suivantes :

- F. DEVAUX - "Fabrication, caractérisation et mise en oeuvre des modulateurs électroabsorbants en onde guidée à 1,55 μm pour des liaisons à très haut débit" - Thèse soutenue le 26 mars 1993 - Université de Paris XI-ORSAY ;
- E. BIGAN - "Modulateurs électroabsorbants en onde guidée pour liaisons optiques à 1,55 μm" - L'écho des Recherches n° 149 - 3ème trimestre 1992 ;
- F. DEVAUX, E. BIGAN, A. OUGAZZADEN, B. PIERRE, F. HUET, M. CARRÉ, and A. CARENCO "InGaAsP/InGaAsP Multiple-Quantum-Well Modulator with Improved Saturation Intensity and Bandwidth Over 20 GHz" - IEEE - pp.1041 - 1135. 1992.

Le générateur 12 est commandé par un circuit d'asservissement 13 de façon que le signal périodique qu'il émet soit synchronisé sur le train d'impulsions optiques.

Le principe de cet asservissement va maintenant être illustré.

On a représenté sur la figure 2a un exemple de train d'impulsions optiques reçues par le modulateur électroabsorbant 11 et sur les figures 2b à 2d plusieurs exemples de signaux périodiques commandant le modulateur électroabsorbant 11.

Le train d'impulsions optiques représenté sur la figure 2a correspond à un train de 9 bits codés 111001011.

Selon la valeur de la tension qui le commande, le modulateur 11 est soit dans un état absorbant, soit dans un état transparent.

Lorsqu'il est dans son état absorbant, le modulateur 11 convertit le signal optique qu'il reçoit en un photocourant iph. Lorsqu'il est transparent, ou qu'il ne reçoit aucun signal optique, le modulateur n'émet aucun photocourant. On a représenté sur les figures 2b à 2d les impulsions absorbées par des créneaux hachurés.

Le signal de tension de commande représenté sur la figure 2b est parfaitement synchronisé avec le train d'impulsions optiques reçues par le modulateur 11. Celui-ci n'est alors jamais absorbant lorsqu'il reçoit une impulsion. Le photocourant moyen $\overline{i_{ph}}$ qu'il émet est nul.

Lorsque, ainsi que cela a été représenté schématiquement sur la figure 2c, le signal de tension de commande est déphasé par rapport au train d'impulsions optiques, toutes les impulsions sont reçues par le modulateur lorsque celui-ci est dans son état absorbant. Le photocourant moyen $\overline{i_{ph}}$ est donc maximum (en l'occurrence : $\overline{i_{ph}}$ = 6/9).

Le signal de tension de commande représenté sur la figure 2c est en désaccord de fréquence par rapport au train d'impulsions optiques reçues par le modulateur. Certaines impulsions optiques sont reçues par le modulateur 11 lorsque celui-ci est dans son état absorbant ; d'autres coïncident totalement ou partiellement, avec des impulsions du signal de commande, le modulateur 11 étant alors dans son état transparent. En moyenne, le photocourant iph est non nul (en l'occurrence : $\overline{i_{ph}}$ =3,76/9).

Ainsi, la valeur moyenne du photocourant $\overline{i_{ph}}$ est minimale lorsque le signal de commande est synchronisé avec le train d'impulsions optiques codées.

Selon l'invention on asservit en phase et en fréquence le signal de commande du générateur 12 de façon à rendre la moyenne du photocourant $\overline{i_{ph}}$, issu du modulateur 11, minimale.

Un exemple détaillé de dispositif de remise en forme a encore été représenté sur la figure 3.

Le modulateur 11 y a été schématisé par une diode reliée à un potentiel de terre et montée en parallèle avec un sous-circuit comportant une résistance de charge 14 de 50 ohms en série avec un condensateur de découplage 15. La borne commune de la résistance de charge 14 et du modulateur 11 est reliée à un té de polarisation formant filtre passe-bande 16. Ce té de polarisation a été schématisé avec une branche d'impédance 16a et une branche formant condensateur 16b.

La branche 16a est reliée par l'intermédiaire d'une résistance 17 à une source d'alimentation en tension 18 de polarisation Vo. Entre les bornes de la résistance 17 est monté le circuit d'asservissement 13 qui commande en fréquence et en phase un générateur de signaux 12. Ce générateur de signaux 12 renvoie sur la branche 16b du té de polarisation des tensions périodiques haute fréquence.

La capacité de découplage 15 et la capacité de la branche 16 du té de polarisation renvoient le photocourant iph sur la résistance 17.

Le circuit d'asservissement 13 est un circuit conventionnel de type PLL et modifie la phase et la fréquence de commande du générateur 12 de signaux de façon que la tension aux bornes de cette résistance 17 soit nulle ou en dessous d'un certain seuil préétabli.

La tension ainsi imposée aux bornes du modulateur électroabsorbant 11 est la somme de la tension de polarisation fournie par la source d'alimentation 18 et de la tension hyperfréquence du générateur 12 de signaux périodiques. Ainsi qu'on l'a illustré sur la figure 3, les signaux émis par le générateur 12 peuvent être de toute forme souhaitée. Cette forme est avantageusement choisie de façon à permettre la remise en forme des impulsions solitons.

Ainsi qu'on aura pu le noter, avec un tel dispositif de remise en forme, il n'est pas nécessaire de prélever une partie du signal optique pour obtenir un signal périodique synchronisé sur ce signal optique.

On notera également que ce dispositif ne nécessite qu'un filtre passe-bande et aucune électronique à composants rapides autre que celle du générateur hyperfréquence.

Ainsi qu'on l'aura compris, les dispositifs qui viennent d'être décrits comme dispositifs de remise en forme peuvent être utilisés de façon plus générale comme dispositif pour la récupération d'un signal synchronisé sur un train d'impulsions optiques modulées. A titre d'exemple, un tel dispositif peut être intégré dans les moyens de réception des impulsions optiques pour la récupération d'un signal d'horloge synchronisé sur les trains d'impulsions reçues, avant que les impulsions ne soient envoyées sur la photodiode de détection.

**Revendications**

**1.** Dispositif pour la remise en forme d'un train d'impulsions optiques, comportant :

- un modulateur (11) optique de type électroabsorbant sur lequel le train d'impulsions est envoyé pour être resynchronisé et remis en forme,
- un générateur (12) de signal périodique réglable en phase et en fréquence qui délivre à ce modulateur (11) un signal périodique qui commande en tension ce modulateur (11),
- des moyens pour synchroniser ce générateur (12) sur le train d'impulsions optiques modulées reçues par le modulateur (11),

**caractérisé en ce que** les moyens pour synchroniser le générateur (12) comportent des moyens d'asservissement (13) commandant le générateur (12) en phase et en fréquence, de façon à minimiser la moyenne du photocourant ($\overline{i_{ph}}$) issu du modulateur (11) lorsqu'il est dans son état absorbant et qu'il reçoit une impulsion optique.

**2.** Dispositif selon la revendication 1, **caractérisé en ce qu'**un amplificateur est disposé en sortie du modulateur (11).

**3.** Dispositif selon l'une des revendications 1 ou 2, **caractérisé en ce qu'**un filtre passe-bande optique est disposé en sortie du modulateur (11).

**4.** Système de télécommunications longues distances par fibres optiques comportant :

- des moyens (1) pour la génération de trains d'impulsions optiques modulées,
- des moyens (2) pour la détection et le décodage de ces impulsions,
- un circuit (3) de fibres optiques pour la propagation des impulsions entre les moyens (1) de génération et les moyens (2) de réception et de décodage,

**caractérisé en ce qu'**il comporte au moins un dispositif (10) selon l'une des revendications 1 à 3 pour la remise en forme en ligne des trains d'impulsions.

**5.** Système de télécommunications selon la revendication 4, pour la transmission de données par impulsions solitons, **caractérisé en ce que** le générateur (12) de signaux périodiques du dispositif de répétition (10) délivre des signaux périodiques conformes pour la remise en forme des impulsions en impulsions solitons.

**6.** Dispositif pour la récupération d'un signal périodique synchronisé sur un train d'impulsions optiques modulées, comportant

- un générateur (12) de signal périodique réglable en phase et en fréquence,
- des moyens électro-optiques (11) comportant un modulateur électroabsorbant commandé en tension par le signal périodique synchronisé issu du générateur (12) et qui reçoivent les impulsions optiques et émettent un signal électrique (iph) correspondant,
- des moyens pour asservir en phase et en fréquence ce générateur (12) en fonction de ce signal électrique, de façon que ce générateur (12) délivre le signal synchronisé,

**caractérisé en ce que** les moyens d'asservissement (13) commandent le générateur (12), de façon que la moyenne du photocourant ($\overline{i_{ph}}$), issu

de ce modulateur (11) lorsqu'il est dans son état absorbant et qu'il reçoit une impulsion optique, soit minimale.

**Patentansprüche**

1. Vorrichtung zum Wiederformen einer Kette von optischen Impulsen mit:

   - einem optischen Modulator (11) vom elektroabsorbierenden Typ, dem die Kette von Impulsen zugeführt wird, um sie wieder zu synchronisieren und wieder zu formen,
   - einem Generator (12) für ein periodisches Signal, das in seiner Phase und seiner Frequenz einstellbar ist, der dem Modulator (11) ein periodisches Signal liefert, das den Modulator (11) spannungssteuert,
   - Einrichtungen zum Synchronisieren des Generators (12) mit der Kette von modulierten optischen Impulsen, die vom Modulator (11) empfangen werden,

   **dadurch gekennzeichent, daß** die Einrichtungen zum Synchronisieren des Generators (12) Regeleinrichtungen (13) umfassen, die den Generator (12) in der Phase und der Frequenz derart steuern, daß der mittlere Photostrom ($\overline{i_{Ph}}$), der vom Modulator (11) kommt, minimal ist, wenn dieser in seinem absorbierenden Zustand ist und wenn dieser einen optischen Impuls empfängt.

2. Vorrichtung nach Anspruch 1, **dadurch gekennzeichnet, daß** ein Verstärker am Ausgang des Modulators (11) angeordnet ist.

3. Vorrichtung nach einem der Ansprüche 1 und 2, **dadurch gekennzeichnet, daß** ein optisches Bandpassfilter am Ausgang des Modulators (11) angeordnet ist.

4. System zur Langstrecken-Nachrichtenverbindung über optische Fasern mit

   - Einrichtungen (1) zum Erzeugen einer Kette von modulierten optischen Impulsen,
   - Einrichtungen (2) zum Erfassen und Dekodieren der Impulse,
   - eine optische Faserleitung (3) zum Fortpflanzen der Impulse zwischen den Erzeugungseinrichtungen (1) und den Empfangs- und Dekodiereinrichtungen (2),

   **dadurch gekennzeichnet, daß** es wenigstens eine Vorrichtung (10) nach einem der Ansprüche 1 bis 3 umfaßt, um die Kette der Impulse in der Leitung wieder zu formen.

5. System zur Nachrichtenverbindung nach Anspruch 4 zum Übertragen von Daten über einzelne Impulse, **dadurch gekennzeichnet, daß** der Generator (12) für die periodischen Signale der wiederholt auftretenden Vorrichtung (10) entsprechende periodische Signale liefert, um die Impulse wieder in einzelne Impulse zu formen.

6. Vorrichtung zum Rückgewinnen eines periodischen Signals, das zu einer Kette von modulierten optischen Impulsen synchronisiert ist, mit

   - einem Generator (12) für ein in seiner Phase und seiner Frequenz einstellbares periodisches Signal,
   - elektrooptischen Einrichtungen (11), die einen elektroabsorbierenden Modulator umfassen, der durch das synchronisierte periodischen Signal, das vom Generator (12) ausgegeben wird, spannungsgesteuert ist und der die optischen Impulse empfängt und ein entsprechendes elektrisches Signal (iph) ausgibt,
   - Einrichtungen zum Regeln des Generators (12) in der Phase und Frequenz in Abhängigkeit von dem elektrischen Signal derart, daß der Generator (12) das synchronisierte Signal ausgibt,

   **dadurch gekennzeichnet, daß** die Regeleinrichtungen (13) den Generator (12) derart steuern, daß der mittlere Photostrom ($\overline{i_{ph}}$) vom Modulator (11) minimal ist, wenn sich dieser in seinem absorbierenden Zustand befindet und einen optischen Impuls empfängt.

**Claims**

1. a light modulator (11) of the electro-absorbent type to which the train of pulses to be resynchronized and reshaped is applied;

   a periodic signal generator (12) that is adjustable in phase and in frequency which applies a periodic signal to the modulator (11), thereby providing voltage control for said modulator (11); and
   means for synchronizing the generator (12) on the train of modulated light pulses received by the modulator (11);

   **characterized in that** the means for synchronizing the generator (12) include servo-control means (13) controlling the generator (12) in phase and in frequency, in such a manner as to minimize the mean photocurrent ($\overline{i_{ph}}$) as generated by the modulator (11) while it is in its absorbent state and receiving a light pulse.

**2.** Apparatus according to claim 1, **characterized in that** an amplifier is disposed at the output from the modulator (11).

**3.** Apparatus according to claim 1 or 2, **characterized in that** an optical bandpass filter is disposed at the output from the modulator (11).

**4.** A long distance optical fiber telecommunications system comprising:

generator means (1) for generating trains of modulated light pulses;
detector and decoder means (2) for detecting and decoding said pulses; and
an optical fiber circuit (3) for propagating pulses from the generator means (1) to the detector and decoder means (2);

**characterized in that** it includes at least one repeater apparatus (10) according to any one of claims 1 to 3 for in-line reshaping of the trains of light pulses.

**5.** A telecommunications system according to claim 4, for transmitting data by means of soliton pulses, the system being **characterized in that** the periodic signal generator (12) of the repeater apparatus (10) delivers periodic signals shaped for reshaping the light pulses into soliton pulses.

**6.** Apparatus for recovering a periodic signal synchronized on a train of modulated light pulses, the apparatus comprising:

a periodic signal generator (12) that is adjustable in phase and in frequency;
electro-optical means (11) including an electro-absorbent modulator which is voltage controlled by the synchronized periodic signal delivered by the generator (12), which means receive the light pulses and emit a corresponding electrical signal ($i_{Ph}$); and
means for servo-controlling the phase and the frequency of the generator (12) as a function of said electrical signal so as to cause the generator (12) to deliver the synchronized signal;
the apparatus being **characterized in that** the servo-control means (13) control the generator (12) in such a manner that the mean photocurrent ($\overline{i_{Ph}}$) delivered by the modulator (11) while in its absorbent state and receiving a light pulse is minimized.

FIG.1

FIG.2a

FIG.2b

FIG.2c

FIG.2d

FIG_3